# EUROPÄISCHE PATENTSCHRIFT

(11) **EP 0 359 239 B1**
(45) Veröffentlichungstag und Bekanntmachung des Hinweises auf die Patenterteilung: **02.02.1994**
(21) Anmeldenummer: 89116966.6
(22) Anmeldetag: 13.09.1989
(51) Int. Cl.: C04B 14/22, C04B 18/04

(54) **Zuschlagstoff für Beton oder ähnliche Baustoffe sowie Verfahren zu dessen Herstellung**
Filler for concrete or the like and process for producing it
Charge pour béton ou analogue et procédé pour le produire

(30) Priorität: 14.09.1988 CH 3428/88
(43) Veröffentlichungstag der Anmeldung: 21.03.1990
(73) Patentinhaber: Lamoni, Patrick, CH-6900 Lugano (CH)
(72) Erfinder: Lamoni, Patrick, CH-6900 Lugano (CH)
(74) Vertreter: Blum, Rudolf Emil Ernst

(56) Entgegenhaltungen:
- DE-A- 1 939 714
- GB-A- 2 086 365

## Beschreibung

Die Erfindung betrifft ein Verfahren zur Herstellung eines Zuschlagstoffes für Baustoffmischungen, gebildet von zu Körnern zerstückeltem und/oder gemahlenem Abfallglas.

Zuschlagstoffe werden im Bauwesen für viele Anwendungen benötigt, insbesondere natürlich bei der Betonherstellung, aber auch bei anderen Zementmischungen, bei Mörteln und bei Mischungen für den Strassenbau und für Fundamente.

Insbesondere für Beton ist in der DE-A 1 939 714 ein Zuschlagstoff beschrieben, welcher aus zermahlenem oder zerstückeltem Abfallglas besteht. Obwohl diesem Zuschlagstoff der Vorteil zukommt, dass er an vielen Orten verfügbar ist und in Backenbrechern und Kollermühlen einfach herstellbar ist, bestehen doch wesentliche Nachteile in der Anwendung, welche eine grosse Verbreitung bisher verhindert haben, obwohl die durch Sammlung anfallende Altglasmenge ständig zunimmt. Insbesondere ist die Haftung von Zement an den glatten Glasflächen der Körner nicht so gut, wie dies bei den üblichen Zuschlagstoffen, wie Kiessand, Schotter-, Split- und Brechsand, Bims usw. der Fall ist. Daraus können sich schlechtere Eigenschaften des mit dem Zuschlagstoff hergestellten Baumaterials ergeben, z.B. ungeeignete Betonqualität. Der bekannte Altglaszuschlagstoff ist ferner scharfkantig, was ebenfalls die Haftung des Zementes nicht fördert, weiter aber vor allem eine grosse Verletzungsgefahr für das den Stoff verarbeitende Personal bildet. Diese Verletzungsgefahr an den äusserst scharfen Glaskanten besteht sowohl beim Transport des Zuschlagstoffes als auch bei dessen Handhabung auf der Baustelle bei der Betonzubereitung.

Hier will die Erfindung Abhilfe schaffen. Die Erfindung, wie sie in den Ansprüchen gekennzeichnet ist, löst die Aufgabe der Herstellung eines Zuschlagstoffes für Baustoffmischungen der aus Abfallglaskörnern besteht, welche durch ihre aufgerauhten Flächen eine einwandfreie Haftung von Zement erlauben und durch ihre gerundeten Kanten eine Verletzungsgefahr vermeiden.

Die durch die Erfindung erreichten Vorteile sind im wesentlichen darin zu sehen, dass ein Zuschlagstoff vorliegt, der sämtliche Vorteile eines gläsernen Zuschlagstoffes aufweist und gleichzeitig eine Bindung mit Zement und eine Verletzungsfreiheit beinhaltet, welche gleich gut wie bei konventionellen Zuschlagstoffen aus Sand, Steinstücken, usw. sind.

Im folgenden wird die Erfindung anhand einem Ausführungsweg näher erläutert.

Die Sammlung des Altglases und dessen erste Bearbeitung durch Zerstückeln und Mahlen erfolgt auf bekannte Weise. Natürlich ist es bei der Verwendung des Altglases als Zuschlagstoff nicht notwendig, die Trennung der verschiedenen Glasfarben beizubehalten. Die Korngrösse wird vorzugsweise so bestimmt, dass die Körner als Altglas im Bereich der für den Zuschlagstoff üblichen Sieblinien liegen, für Beton, z.B. im Bereich der bekannten Sieblinien A₃₂ und B₃₂. Anschliessend an das bekannte Brechen und/oder Mahlen des Altglases wird es einer Schleif- oder Aetzbehandlung unterworfen. Zum Schleifen kann eine rotierende Trommel verwendet werden, worin die Glaskörner unter Zugabe von einem Schleifmittel, vorzugsweise Quarzsand und eventuell Wasser, geschliffen werden. Diese Schleifbehandlung bewirkt zwei-erlei: einerseits werden die gläsern glatten Flächen der Altglaskörner bzw. Altglasstücke aufgerauht; andererseits werden die scharfen Kanten gerundet, wobei hier unter Rundung nicht eine perfekte Rundheit verstanden werden soll, sondern nur ein Abrunden in dem Sinn, dass die Körner bzw. Stücke nicht mehr scharfkantig sind. Nach dieser Behandlung, eventuell auch schon vorher, kann die bekannte Aussiebung der gewünschten Korngrösse erfolgen.

Der derart aufgerauhte und gerundete Zuschlagstoff weist alle Vorteile eines gläsernen Zuschlagstoffes auf: Freiheit von organischen Verunreinigungen, geringeres Gewicht als die meisten bekannten Zuschlagstoffe, gute Festigkeit bei Kompression, relativ hohe Elastizität, Wasserfestigkeit. Bei dem erfindungsgemässen Zuschlagstoff ist ferner eine gute Haftung von Zement oder anderen Bindemitteln gegeben, und es besteht, im Gegensatz zum bekannten Glaszuschlag, praktisch keine Verletzungsgefahr.

Der Zuschlagstoff eignet sich insbesondere für Beton jedweder Art, so Leichtbeton, Normalbeton und Schwerbeton. Der Zuschlagstoff ist inert und eignet sich für alle Bindemittel, hydraulische Bindemittel, wie Luftbindemittel. Auch alle Betonzusatzmittel, wie Betonverflüssiger, Luftporenbildner, Dichtungsmittel, Erstarrungsverzögerer, sowie die bekannten Zusatzstoffe, wie z.B. Farbzusätze, sind ohne Einschränkung zusammen mit dem Zuschlagstoff verwendbar.

Neben der Anwendung bei Beton kann der Zuschlagstoff auch für Mörtel oder für Kofferungen oder bei anderen bekannten Anwendungen von Zuschlagstoff verwendet werden.

## Patentansprüche

1. Verfahren zur Herstellung eines Zuschlagstoffes für Baustoffmischungen, gebildet von zu Körnern zerstückeltem und/oder gemahlenem Abfallglas, dadurch gekennzeichnet, dass auf bekannte Weise gebrochene oder gemahlene Körner aus Abfallglas hergestellt werden und dass diese Körner durch schleifende mechanische Bearbeitung und/oder ätzende chemische Bearbeitung an ihren Flächen aufgerauht und an ihren Kanten abgerundet werden.

2. Verfahren nach Anspruch 1, dadurch gekennzeichnet, dass die Körner zur Schleifbearbeitung unter Zugabe von Wasser und Quarzsand in eine rotierende Trommel gegeben werden.

3. Verfahren nach Anspruch 1, dadurch gekennzeichnet, dass die Körner zur Aetzbearbeitung mit Flusssäure behandelt werden.

## Claims

1. Method of producing an aggregate for building material mixtures, made of refuse glass crushed and/or ground to granules, characterized in that crushed or ground granules of refuse glass are produced by known techniques and in that these granules are roughened at their surfaces and rounded at their edges by means of a grinding treatment and/or an etching chemical treatment.

2. Method according to claim 1, characterized in that for the grinding treatment the granules are placed with an addition of water and quartz sand into a rotating drum.

3. Method according to claim 1, characterized in that for the etching treatment the granules are treated by hydrofluoric acid.

## Revendications

1. Procédé pour produire une matière agrégative, pour des mélanges de matériaux de construction, formée par des déchets de verre morcelés et/ou broyés en granules, caractérisé en ce que des granules de déchets de verre morcelés ou broyés sont produits de manière connue et en ce que lesdits granules sont égratignés à leurs surfaces et arrondis à leurs bords par traitement mécanique abrasif et/ou par traitement chimique caustique.

2. Procédé selon la revendication 1, caractérisé en ce que pour le traitement abrasif les granules sont mis dans un tambour rotatif en additionnant de l'eau et du sable quartzeux.

3. Procédé selon la revendication 1, caractérisé en ce que pour le traitement caustique les granules sont traités avec de l'acide fluorhydrique.
